# EUROPEAN PATENT APPLICATION

(11) **EP 0 561 583 A1**
(43) Date of publication of application: **22.09.1993**
(21) Application number: 93301931.7
(22) Date of filing: 15.03.1993
(51) Int. Cl.: A47J 37/12

(54) **Alarm device for cooker**

(30) Priority: 16.03.1992 JP 91614/92
(71) Applicant: PALOMA KOGYO KABUSHIKI KAISHA, Nagoya-shi (JP)
(72) Inventor: Morihira, Yoshihiro, Midori-ku, Nagoya-shi (JP); Hiraoka, Hajime, Nishikasugai-gun, Aichi-pref. (JP)
(74) Representative: Harvey, David Gareth

(57) **Abstract**

An improved alarm device for a cooker e.g. a deep fat fryer, automatically informs an operator when a batch of cooking oil should be replaced with a new batch. The alarm device informs the operator of the replacement timing when an accumulated total of heating or combustion time, cooking time, or heating amount (temperature integrated over time) exceeds a predetermined standard value.

The alarm device (50) is fitted to a fryer (10) containing oil, which is heated by a pulse combustor (21, 22); the latter is operated under control of a combustion controller (40). A temperature sensor (11) monitors the oil temperature and when the alarm device (50) determines that the batch of cooking oil should be replaced, it acutates a warning device such as a lamp (52).

## Description

The present invention relates to an alarm device for a cooker, for informing an operator of the appropriate time to replace cooking oil. The alarm device is generally used in a cooker for heating and cooking food items in cooking liquid or cooking oil.

In cookers for example, fryer apparatus, food items such as french fries and breaded chicken are placed into hot cooking oil which is contained in a frypot and maintained in a predetermined temperature range through a heating control process.

The replacement of cooking oil to maintain the quality thereof is required for desirable cooking of such food items. In a general procedure, operators replace used cooking oil with a new batch based on their long-term experience, cloudiness of the used oil, and the former replacement time.

This conventional method based on the operators' experience, however, can not adequately specify the optimum replacement timing, and does not allow the quality of cooking oil to be maintained above a certain level. The optimum replacement timing of cooking oil differs by its use conditions: sometimes earlier than usual or other times later than usual. Even when an operator takes the trouble to record each replacement time, it does not always tell the operator the optimum replacement timing for the next new batch. Frequent replacement may mean waste of still-usable cooking oil, and although maintaining the quality thereof above a certain level, it is uneconomical.

An object of the invention is to-provide a novel alarm device for informing the operator of the appropriate time for replacing cooking oil.

Another object of the invention is to provide an alarm device which determines the appropriate replacement timing of cooking oil without depending upon the operator's experience.

This objective will enable the quality of cooking oil to be maintained above a certain level and to prevent untimely replacement of still-usable cooking oil.

A further object of the invention is to provide an alarm device which determines the appropriate timing for replacement of cooking oil based on the heating time or the cooking time, or the amount of heating to which the oil has been subjected.

The present invention provides an alarm device for informing an operator of an appropriate replacement timing of a certain batch of cooking oil, which is applied to a cooker for heating and cooking food items in cooking oil. The alarm device of the invention includes: a heating time accumulation unit for accumulating heating time during which the cooking oil is heated; a heating time comparison unit for comparing the heating time accumulated by the heating time accumulation unit with a predetermined standard heating time; and an alarm unit for informing an operator of a replacement timing of the certain batch of cooking oil when the accumulated heating time exceeds the predetermined standard heating time.

In the alarm device of the invention, the heating time comparison unit compares the heating time of cooking oil accumulated by the heating time accumulation unit with a predetermined standard heating time, and the alarm unit informs the operator of a replacement timing of a certain batch of cooking oil when the accumulated heating time exceeds the predetermined standard heating time. Cooking oil deteriorates substantially proportionally to the heating time. This system suitably determines the appropriate replacement timing of a certain batch of cooking oil independent of the operator's experience but based on the heating time.

In another application of the invention, the alarm device includes: a cooking time accumulation unit for accumulating cooking time during which food items are cooked in cooking oil; a cooking time comparison unit for comparing the cooking time accumulated by the cooking time accumulation unit with a predetermined standard cooking time; and an alarm unit for informing an operator of a replacement timing of a certain batch of cooking oil when the accumulated cooking time exceeds the predetermined standard cooking time.

In this application of the invention, the cooking time comparison unit compares the cooking time accumulated by the cooking time accumulation unit with a predetermined standard cooking time, and the alarm unit informs the operator of a replacement timing of a certain batch of cooking oil when the accumulated cooking time exceeds the predetermined standard cooking time. Cooking oil deteriorates substantially proportionally to the cooking time during which food items are heated and cooked in the cooking oil. This system suitably determines the appropriate replacement timing of a certain batch of cooking oil independent of the operator's experience but based on the cooking time.

Alternatively, the alarm device of the invention includes: a temperature detecting unit for detecting temperature of cooking oil; a heating amount accumulation unit for accumulating a heating amount or an equivalent amount substantially proportional to the heating amount based on the temperature detected by the temperature detecting unit and a cooking time; a heating amount comparison unit for comparing the heating amount or equivalent amount accumulated by the heating amount accumulation unit with a predetermined standard amount; and an alarm unit for informing an operator of a replacement timing of a certain batch of cooking oil when the accumulated heating amount or equivalent amount exceeds the predetermined standard heating amount.

In this alternative device of the invention, the heating amount comparison unit compares the heating amount or equivalent amount substantially proportionally to the heating amount accumulated by the heating amount accumulation unit with a predetermined standard heating amount, and the alarm unit informs the operator of a replacement timing of a certain batch of cooking oil when the accumulated heating amount or equivalent amount exceeds the predetermined standard heating amount. Cooking at higher temperatures generally accelerates the rate of deterioration of cooking oil. This system more suitably determines the appropriate replacement timing of a certain batch of cooking oil based on the heating amount or equivalent amount corresponding to the cooking time and the temperature of cooking oil.

The present invention will be described in more detail by way of example only in the following detailed description of preferred embodiments with reference to the accompanying drawings, in which:
Fig. 1 is a view schematically illustrating a fryer apparatus embodying the invention;
Fig. 2 is a flowchart showing an alarm control routine executed by the alarm device 50 of Fig. 1;
Fig. 3 is a flowchart showing another alarm control routine executed by the alarm device 50 of Fig. 1; and
Fig. 4 is a flowchart showing still another alarm control routine executed by the alarm device 50 of Fig. 1.

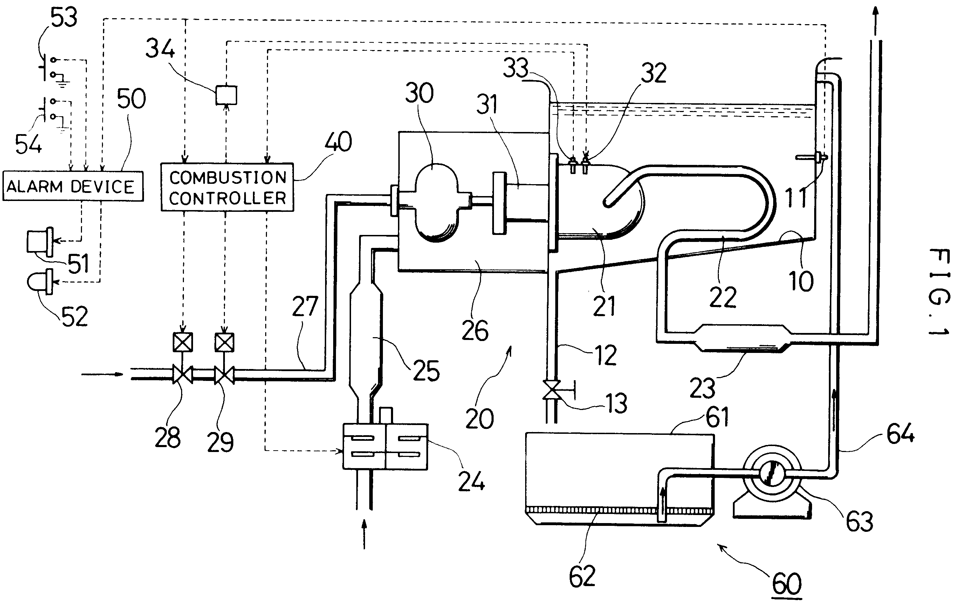

Fig. 1 is a schematic view illustrating a fryer apparatus including an alarm device for informing an operator of an appropriate replacement timing of a certain batch of cooking oil as a preferred embodiment of the invention. Although the alarm device is incorporated in the fryer apparatus in this embodiment, it may be externally attached to the fryer apparatus according to requirements. The fryer apparatus of the embodiment used for cooking or deep fat frying of food items such as french fries or breaded chickens includes: a frypot 10 which is filled with cooking liquid or oil; a pulse combustor 20 for heating the cooking oil in the frypot 10; a combustion controller 40 for controlling combustion of the pulse combustor 20; an alarm device 50 for accumulating the heating amount and informing the operator of the appropriate end-of-cooking timing as well as appropriate replacement timing of a certain batch of cooking oil; and an oil cleaner unit 60 for filtering used cooking oil.

The pulse combustor 20 in the fryer apparatus has a combustion-exhaust system, an air supply system, and a fuel gas supply system.

The combustion-exhaust system of the pulse combustor 20 includes: a combustion chamber 21 disposed in the frypot 10 for pulse combustion; a tail pipe 22 winding its way through the frypot 10 and constituting an exhaust conduit of hot combustion byproducts from the combustion chamber 21; and an exhaust muffler 23 located at an intermediate part of the tail pipe 22. The cooking oil in the frypot 10 is heated by thermal energy transmitted through the outside walls of the combustion chamber 21 and the tail pipe 22. A temperature sensor 11 for detecting the temperature of the cooking oil in the frypot 10 is attached to the side wall of the frypot 10.

The air supply system for supplying air to the combustion chamber 21 includes: a fan 24 for feeding the air for combustion; an intake muffler 25 connected to the fan 24; and an air chamber 26 coupled to the combustion chamber 21 for receiving the air fed through the intake muffler 25.

The fuel gas supply system includes: first and second electromagnetic valves 28 and 29 mounted in a gas conduit 27 for opening and closing a flow path for fuel gas; and a gas chamber 30 disposed in the air chamber 26.

In the air chamber 26, there is a mixing chamber 31 coupled with and connected to the gas chamber 30. The fuel gas is supplied into the mixing chamber 31 via the gas chamber 30 while the air is supplied thereto via the air chamber 26. The separately supplied fuel gas and air are mixed in the mixing chamber 31 and transmitted to the combustion chamber 21 as an air/fuel mixture. The combustion chamber 21 is provided with an ignition plug 32 for igniting the air/fuel mixture on the commencement of combustion, and a flame rod 33 for detecting the flame.

The pulse combustor 20 thus constructed repeats explosion and combustion at a fixed cycle by taking advantage of its automatic ignition and absorption characteristics at stationary combustion. In this embodiment, a pair of check valves or flapper valves (not shown) are attached to the respective inlets of the fuel gas and the air to the mixing chamber 31 so as to prevent back flow of combustion exhaust into the fuel gas supply system and the air supply system.

The combustion controller 40 for controlling combustion of the pulse combustor 20 is constructed as a microcomputer including: a conventional arithmetic/logic/operation circuit consisting of a CPU or central processing unit, a ROM or reading only memory, and a RAM or random access memory, an input interface for inputting signals sent from the temperature sensor 11 and the flame rod 33, and an output interface for outputting control signals to the first and second electromagnetic valves 28 and 29, the fan 24, an igniter 34, and the alarm device 50. None of these elements are shown in the drawing of Fig. 1.

The combustion controller 40 starts and stops combustion (controls the combustion ON and OFF) to maintain the temperature of cooking oil in a predetermined range. In this preferred embodiment, combustion starts when the temperature on the temperature sensor 11 falls below 180°C, and combustion stops when the temperature rises over 182°C, but the invention is by no means limited to these specific temperatures. The temperature of the cooking oil is thus efficiently maintained in the predetermined range e.g. 180 to 182°C. Food items held in a food basket (not shown) are placed and deep fried in the cooking oil which is heated in the above predetermined range.

The alarm device 50 is, like the combustion controller 40, constructed as a micro-computer constituting an arithmetic/logic/operation circuit. The alarm device 50 is connected to the temperature sensor 11, a buzzer 51 for informing the operator of the appropriate end-of-cooking timing and a lamp 52 for informing the operator of the appropriate replacement timing of a certain batch of cooking oil. The alarm device 50 is further provided with a start switch 53 for initiating a cooking process and a reset switch 54 to be operated at the time of oil replacement, which are both mounted on a control panel (not shown).

The oil cleaner unit 60 includes: an oil tank 61 disposed under an oil exhaust pipe 12 connected to the bottom face of the frypot 10; a filter element 62 mounted over and above the bottom face of the oil tank 61; an oil pump 63 for pumping up cooking oil filtering through the filter element 62; and a piping element 64 constituting a circulation path for the cooking oil. Used cooking oil contained in the frypot 10 is allowed into the oil tank 61 by opening an exit valve 13 disposed in the oil exhaust pipe 12, drawn through the filter element 62, and returned to the frypot 10 by means of the oil pump 63.

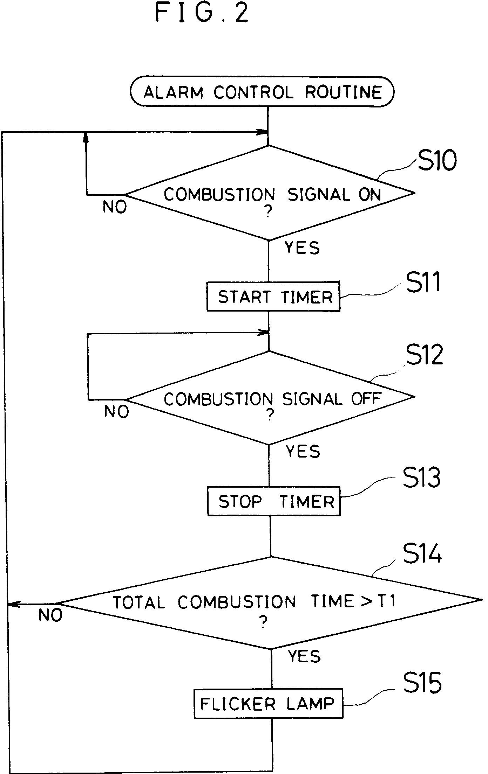

An alarm control routine of a first embodiment executed by the alarm device 50 of Fig. 1 is described according to the flowchart of Fig. 2. While the alarm device 50 is executing the alarm control routine, the combustion controller 40 executes a combustion control routine.

In the first embodiment, the alarm device 50 informs the operator of the appropriate replacement timing of a certain batch of cooking oil based on the heating time determined through accumulation of combustion time.

When the program starts, at step S10, it is determined whether the combustion controller 40 outputs a combustion ON signal to initiate combustion of the pulse combustor 20. The alarm device 50 waits until a combustion ON signal is output to the pulse combustor 20. When the pulse combustor 20 starts combustion, a timer incorporated in the alarm device 50 starts counting at step S11. The program then proceeds to step S12 at which it is determined whether the combustion controller 40 outputs a combustion OFF signal to stop combustion of the pulse combustor 20. The timer continues counting until the combustion OFF signal is output to the pulse combustor 20. When the combustion OFF signal is output, the program proceeds to step S13 at which the timer stops counting. The count on the timer represents the total combustion time. At the subsequent step S14, the total combustion time is compared with a predetermined standard combustion time T1. The processing of steps S10 through S14 is repetitively executed until the total combustion time exceeds the predetermined standard combustion time T1. The predetermined standard combustion time T1 shows an average life of cooking oil, that is, possible usable hours before the current batch of cooking oil should be replaced with a new batch.

When the total combustion time exceeds the predetermined standard combustion time T1 at step S14, the program goes to step S15 at which flicker of the lamp 52 informs the operator of the replacement timing of the current batch of cooking oil. The system of the first embodiment informs the operator of the appropriate replacement timing without requiring the operator's experience (unlike conventional systems) and is based on the heating time of the current batch of cooking oil. This alarm system maintains the quality of cooking oil above a certain level to assure cooking of substantially identical quality and prevents waste of still-usable cooking oil.

After activating the lamp 52, the program returns to step S10. When the operator completes replacement of cooking oil and operates the reset switch 54, the count on the timer built in the alarm device 50 is initialized to zero. The alarm device 50 with the timer then starts the above procedure for a new batch of cooking oil.

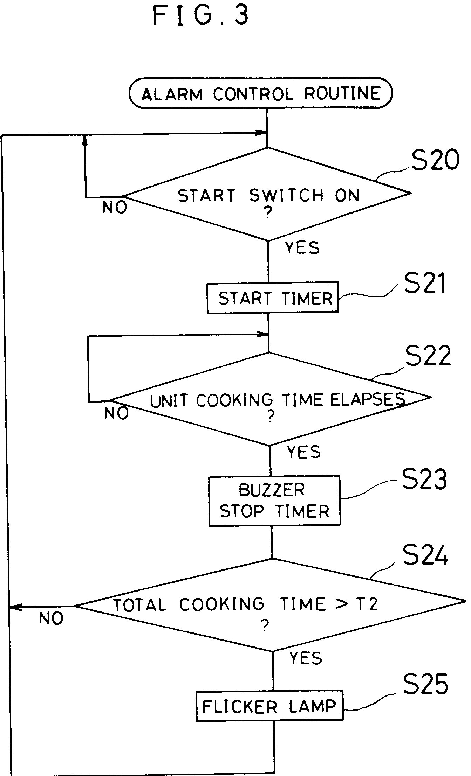

Another alarm control routine of a second embodiment can be executed by the alarm device 50 of Fig. 1, and is described according to the flowchart of Fig. 3. While the alarm device 50 is executing this alarm control routine, the combustion controller 40 executes a combustion control routine.

In the second embodiment, the alarm device 50 informs the operator of the appropriate replacement timing of a certain batch of cooking oil based on the accumulated cooking time.

When the program starts, at step S20, it is determined whether the start switch 53 is pressed to initiate a cooking process. The alarm device 50 waits until the start switch 53 is operated. When the operator presses the start switch 53 simultaneously with placing food items into cooking oil contained in the frypot 10, the program proceeds to step S21 at which a timer incorporated in the alarm device 50 starts counting. At the subsequent step S22, it is determined whether a unit cooking time required for completion of a cooking process has elapsed. When the unit cooking time has elapsed, the program goes to step S23 at which the buzzer 51 informs the operator of completion of the cooking process and the timer stops counting. Here the count on the timer represents the total cooking time. The operator takes the cooked food items out of the cooking oil contained in the frypot 10 at an appropriate timing according to information of the buzzer 51.

The program then proceeds to step S24 at which the total cooking time is compared with a predetermined standard cooking time T2. The processing of steps S20 through S24 is repetitively executed until the total cooking time exceeds the predetermined standard cooking time T2. In other words, every time when a cooking process is completed, the total cooking time is compared with the predetermined standard cooking time T2. The predetermined standard cooking time T2 shows an average life of cooking oil, that is, usable hours before the current batch of cooking oil is replaced with a new batch.

When the total cooking time exceeds the predetermined standard cooking time T2 at step S24, the program goes to step S25 at which flicker of the lamp 52 informs the operator of the replacement timing of the current batch of cooking oil. The system of the second embodiment informs the operator of the appropriate replacement timing not depending upon the operator's experience as in a conventional system but based on the heating time of the current batch of cooking oil. This alarm system maintains the quality of cooking oil above a certain level to assure cooking of substantially identical quality and prevents waste of still-usable cooking oil.

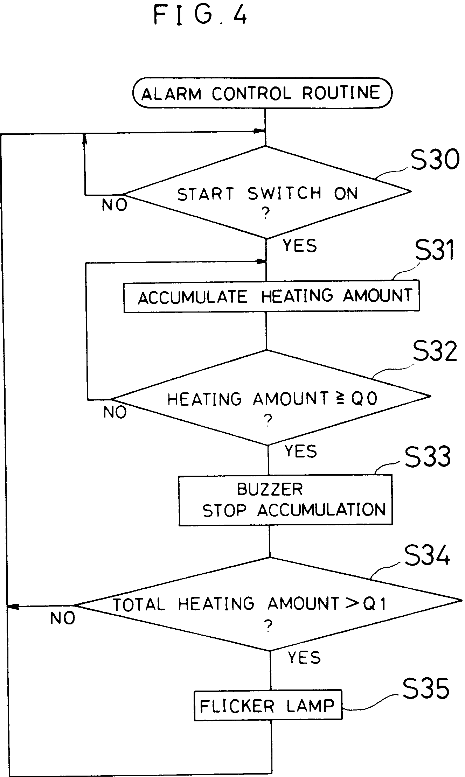

Still another alarm control routine of a third embodiment can be executed by the alarm device 50 of Fig. 1, and is described according to the flowchart of Fig. 4. In the third embodiment, the alarm device 50 informs the operator of the appropriate replacement timing of a certain batch of cooking oil based on the accumulated heating amount. The heating amount used in the embodiment does not represent a strict sense of heating amount but denotes a certain control parameter, which is substantially proportional to the heating amount and is defined as the temperature of cooking oil integrated over the cooking time.

When the program starts, at step S30, it is determined whether the start switch 53 is pressed to initiate a cooking process. The alarm device 50 waits until the start switch 53 is operated. When the operator presses the start switch 53 simultaneously with placing food items into cooking oil contained in the frypot 10, the program proceeds to step S31 at which the alarm device 50 starts accumulation of the heating amount. The program then proceeds to step S32 where the accumulated heating amount is compared with a preset heating amount Q0. When the accumulated heating amount becomes equal to or greater than the preset heating amount Q0, the program goes to step S33 at which the buzzer 51 informs the operator of completion of the cooking process and the alarm device 50 stops accumulation of the heating amount. The operator takes the cooked food items out of the cooking oil contained in the frypot 10 at an appropriate timing according to information of the buzzer 51.

The above procedure is repeated for each cooking process. The program then proceeds to step S34 at which the total of the accumulated heating amount is compared with a predetermined standard heating amount Q1. The processing of steps S30 through S34 is repetitively executed until the total heating amount exceeds the predetermined standard heating amount Q1. When the total heating amount exceeds the predetermined standard heating amount Q1 at step S34, the program goes to step S35 at which flicker of the lamp 52 informs the operator of the replacement timing of the current batch of cooking oil. Cooking at higher temperatures generally accelerates the deterioration rate of cooking oil. The system of the third embodiment thus determines the appropriate replacement timing of a certain batch of cooking oil more suitably than the first and the second embodiments, based on the heating amount corresponding to the cooking time and the temperature of cooking oil.

Since there may be many modifications, alterations, and changes without departing from the scope of the appended claims, it is to be clearly understood that the above embodiments are only illustrative and not restrictive in any sense. For example, the alarm device is applied to the fryer apparatus including a pulse combustor as the heat source in the above described embodiments, but it may be applied to various cooking apparatus and cookers with Bunsen burners or the like gas burners or electric heaters. The alarm device is incorporated in the fryer apparatus in the embodiment, but a separate alarm device may be attached to the cooker, or the combustion or heating controller may have functions of the alarm device.

In the second and third embodiments, a press of the start switch 53 is required for determining presence of food items in cooking oil. Accumulation of the cooking time or heating amount may, however, be initiated according to another system by detecting and using a downward slope or gradient of the oil temperature. When cold, food items are placed into cooking oil, the temperature of cooking oil abruptly drops. In this sytem, when the oil temperature gradient becomes equal to or greater than a predetermined limit, the alarm device 50 starts counting of the cooking time or accumulation of the heating amount. This system frees the operator from troublesome manual operation of the start switch and further improves the usability of the fryer apparatus.

The fryer apparatus of the invention may be structured to allow the operator to determine the standard combustion time T1, the standard cooking time T2, or the standard heating amount Q1, used as the criteria for determining the appropriate replacement timing, according to the types of cooking oil and cooking through operation of the control panel (not shown).

In the above-described embodiments, the chosen standard T1, T2 or Q1 is compared to a predetermined value, and the warning lamp 52 is activated when the standard exceeds the predetermined value. Alternatively, the lamp 52 could be activated as soon as the standard equals the predetermined value.

## Claims

1. An alarm device for informing an operator of an appropriate replacement timing of a certain batch of cooking oil, which is applied to a cooker for heating and cooking food items in cooking oil,
said alarm device (50) comprising:
heating time accumulation means (S11) for accumulating heating time during which said cooking oil is heated;
heating time comparison means (S14) for comparing the heating time accumulated by said heating time accumulation means (S11) with a predetermined standard heating time (T1); and
alarm means (52) for informing an operator of a replacement timing of said certain batch of cooking oil when said accumulated heating time exceeds said predetermined standard heating time.

2. An alarm device for informing an operator of an appropriate replacement timing of a certain batch of cooking oil, which is applied to a cooker for heating and cooking food items in cooking oil,
said alarm device (50) comprising:
cooking time accumulation means (S21) for accumulating cooking time during which the food items are cooked in said cooking oil;
cooking time comparison means (S24) for comparing the cooking time accumulated by said cooking time accumulation means (S21) with a predetermined standard cooking time (T2); and
alarm means (52) for informing an operator of a replacement timing of said certain batch of cooking oil when said accumulated cooking time exceeds said predetermined standard cooking time.

3. An alarm device for informing an operator of an appropriate replacement timing of a certain batch of cooking oil, which is applied to a cooker for heating and cooking food items in cooking oil,
said alarm device (50) comprising:
temperature detecting means (11) for detecting temperature of said cooking oil;
heating amount accumulation means (S31) for accumulating a heating amount or an equivalent amount substantially proportional to the heating amount based on the temperature detected by said temperature detecting means (11) and cooking time;
heating amount comparison means (S34) for comparing the heating amount or equivalent amount accumulated by said heating amount accumulation means (S31) with a predetermined standard heating amount (Q1); and
alarm means (52) for informing an operator of a replacement timing of said certain batch of cooking oil when said accumulated heating amount or equivalent amount exceeds said predetermined standard heating amount.

4. A cooker for cooking food items in a cooking liquid medium, said cooker comprising a pot (10) filled with said cooking liquid medium, a heat source (21, 22) for heating said cooking liquid medium, controlling means (40) for controlling said heat source, and an alarm device (50) for informing an operator of an appropriate replacement timing of a certain batch of cooking liquid medium;
said alarm device (50) comprising:
heating time accumulation means (S11) for accumulating heating time during which said cooking liquid medium is heated;
heating time comparison means (S14) for comparing the heating time accumulated by said heating time accumulation means (S11) with a predetermined standard heating time (T1); and
alarm means (52) for informing an operator of a replacement timing of said certain batch of cooking liquid medium when said accumulated heating time exceeds said predetermined standard heating time.

5. A cooker for cooking food items in a cooking liquid medium, said cooker comprising a pot (10) filled with said cooking liquid medium, a heat source (21, 22) for heating said cooking liquid medium, controlling means (40) for controlling said heat source, and an alarm device (50) for informing an operator of an appropriate replacement timing of a certain batch of cooking liquid medium;
said alarm device (50) comprising:
cooking time accumulation means (S21) for accumulating cooking time during which the food items are cooked in said cooking liquid medium;
cooking time comparison means (S24) for comparing the cooking time accumulated by said cooking time accumulation means (S21) with a predetermined standard cooking time; and
alarm means (52) for informing an operator of a replacement timing of said certain batch of cooking liquid medium when said accumulated cooking time exceeds said predetermined standard cooking time.

6. A cooker for cooking food items in a cooking liquid medium, said cooker comprising a pot (10) filled with said cooking liquid medium, a heat source (21, 22) for heating said cooking liquid medium, controlling means (40) for controlling said heat source, and an alarm device (52) for informing an operator of an appropriate replacement timing of a certain batch of cooking liquid medium;
said alarm device (50) comprising:
temperature detecting means (11) for detecting temperature of said cooking liquid medium;
heating amount accumulation means (S31) for accumulating a heating amount or an equivalent amount substantially proportional to the heating amount based on the temperature detected by said temperature detecting means (11) and cooking time;
heating amount comparison means (S34) for comparing the heating amount or equivalent amount accumulated by said heating amount accumulation means (S31) with a predetermined standard heating amount (Q1); and
alarm means (52) for informing an operator of a replacement timing of said certain batch of cooking liquid medium when said accumulated heating amount or equivalent amount exceeds said predetermined standard heating amount.

7. A fryer apparatus for deep fat frying food items in cooking oil, said fryer apparatus comprising a frypot (10) filled with cooking oil, a pulse combustor (21, 22) for heating said cooking oil in said frypot, combustion controlling means (40) for controlling said pulse combustor, and an alarm device (50) for informing an operator of an appropriate replacement timing of a certain batch of cooking oil;
said alarm device (50) comprising:
heating time accumulation means (S11) for accumulating heating time during which said cooking oil is heated;
heating time comparison means (S14) for comparing the heating time accumulated by said heating time accumulation means (S11) with a predetermined standard heating time (T1); and
alarm means (52) for informing an operator of a replacement timing of said certain batch of cooking oil when said accumulated heating time exceeds said predetermined standard heating time.

8. A fryer apparatus for deep fat frying food items in cooking oil, said fryer apparatus comprising a frypot (10) filled with cooking oil, a pulse combustor (21, 22) for heating said cooking oil in said frypot, combustion controlling means (40) for controlling said pulse combustor, and an alarm device (50) for informing an operator of an appropriate replacement timing of a certain batch of cooking oil;
said alarm device (50) comprising:
cooking time accumulation means (S21) for accumulating cooking time during which the food items are cooked in said cooking oil;
cooking time comparison means (S24) for comparing the cooking time accumulated by said cooking time accumulation means (S21) with a predetermined standard cooking time (T2); and
alarm means (52) for informing an operator of a replacement timing of said certain batch of cooking oil when said accumulated cooking time exceeds said predetermined standard cooking time.

9. A fryer apparatus for deep fat frying food items in cooking oil, said fryer apparatus comprising a frypot (10) filled with cooking oil, a pulse combustor (21, 22) for heating said cooking oil in said frypot, combustion controlling means (40) for controlling said pulse combustor, and an alarm device (50) for informing an operator of an appropriate replacement timing of a certain batch of cooking oil;
said alarm device (50) comprising:
temperature detecting means (11) for detecting temperature of said cooking oil;
heating amount accumulation means (S31) for accumulating a heating amount or an equivalent amount substantially proportional to the heating amount based on the temperature detected by said temperature detecting means (11) and cooking time;
heating amount comparison means (S34) for comparing the heating amount or equivalent amount accumulated by said heating amount accumulation means (S31) with a predetermined standard heating amount (Q1); and
alarm means (52) for informing an operator of a replacement timing of said certain batch of cooking oil when said accumulated heating amount or equivalent amount exceeds said predetermined standard heating amount.

10. Fryer apparatus according to claim 7, 8 or 9, which further comprises cleaning means (60) for cleaning the cooking oil and returning the cleaned cooking oil to said frypot (10).

11. Fryer apparatus according to claim 10, wherein said cleaning means (60) further comprises: a filter element (62) for filtering out food particles from the cooking oil; and a transportation element (63, 64) for returning cooking oil drained through said filter element (62) to said frypot (10).
